# EUROPÄISCHE PATENTSCHRIFT

(11) **EP 1 887 541 B1**
(45) Veröffentlichungstag und Bekanntmachung des Hinweises auf die Patenterteilung: **29.04.2015**
(21) Anmeldenummer: 07014034.8
(22) Anmeldetag: 18.07.2007
(51) Int. Cl.: G08G 1/16, B60Q 9/00, B60R 1/00, B60W 30/12

(54) **Kraftfahrzeug mit einem Fahrspurerfassungssystem**
Motor vehicle with a lane detection system
Véhicule automobile doté d'un système de détection de voie

(30) Priorität: 04.08.2006 DE 102006036515
(43) Veröffentlichungstag der Anmeldung: 13.02.2008
(73) Patentinhaber: AUDI AG, 85045 Ingolstadt (DE)
(72) Erfinder: Berlitz, Stephan, 86529 Schrobenhausen (DE); Mies, Robert, 85057 Ingolstadt (DE)
(74) Vertreter: Thielmann, Frank

(56) Entgegenhaltungen:
- EP-A2- 1 304 264
- US-A1- 2002 167 589
- US-A1- 2004 066 376
- US-A1- 2005 125 121
- US-B1- 6 429 789

## Beschreibung

Aus dem Stand der Technik sind Fahrspurerfassungssysteme bekannt, die zum Beispiel als Rückspiegel und/oder als Kamera in Verbindung mit einem Monitor als Anzeigevorrichtung ausgeführt sind. Blickt der Fahrer in den Rückspiegel oder auf die Anzeigevorrichtung, so kann er den rückwärtigen Verkehr beobachten und damit auch feststellen, auf welcher Fahrspur sich ein nachfolgendes Fahrzeug befindet. In Abhängigkeit von den Wetterbedingungen und insbesondere nachts ist eine solche Zuordnung sehr schwierig, insbesondere dann, wenn das Licht eingeschaltet ist, mehrere Fahrzeuge folgen und diese dann noch einen relativ großen Abstand haben. Diese Fahrzeuge können dann nur schwer einer Fahrspur zugeordnet werden.

Ferner sind aus dem Stand der Technik Überholwarnsysteme bekannt, die mittels einer Kamera oder Radartechnik auf ein überholendes oder benachbartes Fahrzeuges aufmerksam machen. Diese Systeme sind häufig so ausgeführt, dass sie auch einen Hinweis darauf geben in welchem Abstand sich das überholende und/oder benachbarte Fahrzeug zum eigenen Fahrzeug befindet. Es kann somit daraus geschlossen werden, ob gegebenenfalls ein Spurwechsel gefahrlos möglich oder dies mit erhöhter Unfallgefahr verbunden ist.

US 6 429 789 B1 offenbart eine Vorrichtung zur Erfassung und Darstellung von für ein Fahrzeug relevanten Informationen im Sinne eines Fahrzeugumfeldüberwachungssystems. Dabei werden über Sensoren fahrzeugspezifische bzw. umgebungsspezifische Informationen erfasst, über eine Steuereinrichtung verarbeitet und an einem Display ausgegeben. Aufgabe der Erfindung ist es einem Fahrzeugführer ein System zur Verfügung zu stellen mittels dem es ihm möglich ist nachfolgende Verkehrssituationen besser einschätzen zu können.

Die Aufgabe wird erfindungsgemäß durch den Gegenstand des Patentanspruches 1 gelöst.

Vorteilhafte Weiterbildungen ergeben sich in Verbindung mit den Unteransprüchen.

Vorteil der Erfindung ist, dass das Kraftfahrzeug mit einem Fahrspurerfassungssystem zum Erfassen zumindest einer rückwärtigen Fahrspur, mit einer Markierungserzeugungseinrichtung und mit einer Anzeigeeinrichtung ausgeführt ist, und dass aufgrund eines vom Fahrspurerfassungssystem erzeugten Fahrspursignals über die Markierungserzeugungseinrichtung eine die erfasste Fahrspur darstellende Markierung an der Anzeigeeinrichtung erzeugt wird. Somit ist es dem Kraftfahrzeugführer auch bei schwierigen Sichtverhältnissen möglich aufgrund der Markierung die Fahrspur zu erkennen, was insbesondere vorteilhaft ist, wenn mehrere Fahrspuren in die gleiche Fahrtrichtung führen und für jede Fahrspur eine Markierung an der Anzeigeeinrichtung erzeugt wird. Durch Blick auf die Anzeigeeinrichtung, die beispielsweise auch als Rückspiegel und/oder als Monitor ausgeführt ist, kann ein nachfolgendes Fahrzeug erkannt und aufgrund der Markierung auch der entsprechenden Fahrspur zugeordnet werden.

Ist das Kraftfahrzeug zusätzlich mit einer Abstandsmesseinrichtung zum Messen des Abstandes zu nachfolgenden Fahrzeugen und zum Kennzeichnen des Abstandes in Verbindung mit der Markierungserzeugungseinrichtung ausgeführt, so kann noch beurteilt werden in welchem Abstand und auf welcher Fahrspur sich ein nachfolgendes oder benachbartes Fahrzeug befindet. Es ist somit möglich einen eventuell bevorstehenden Spurwechsel beurteilen zu können. Besonders vorteilhaft ist es hierbei, wenn entweder aufgrund des Signals der Abstandsmesseinrichtung die Leuchtdichte und/oder die Farbe der Markierung verändert wird. Beispielsweise kann die Leuchtdichte vorteilhaft erhöht werden, wenn von einem nachfolgenden Fahrzeug bei einem Spurwechsel eine Gefahr ausgeht oder dies in der Farbe "rot" für große Gefahr, "orange" für bedingte Gefahr und "grün" für keine Gefahr gekennzeichnet wird.

Weitere Vorteile und Einzelheiten der Erfindung ergeben sich aus der nachfolgenden Beschreibung eines Ausführungsbeispieles anhand der Zeichnungen in Verbindung mit den Unteransprüchen.
In der Figur 1 ist ein Fahrspurerfassungssystem eines Kraftfahrzeuges in prinzipieller Darstellung gezeigt und
in der Figur 2 eine Verkehrssituation zur Erläuterung der Erfindung.

In der nachfolgenden Erläuterung der Erfindung anhand der Zeichnungen sind dieselben Elemente mit denselben Bezugszeichen gekennzeichnet.

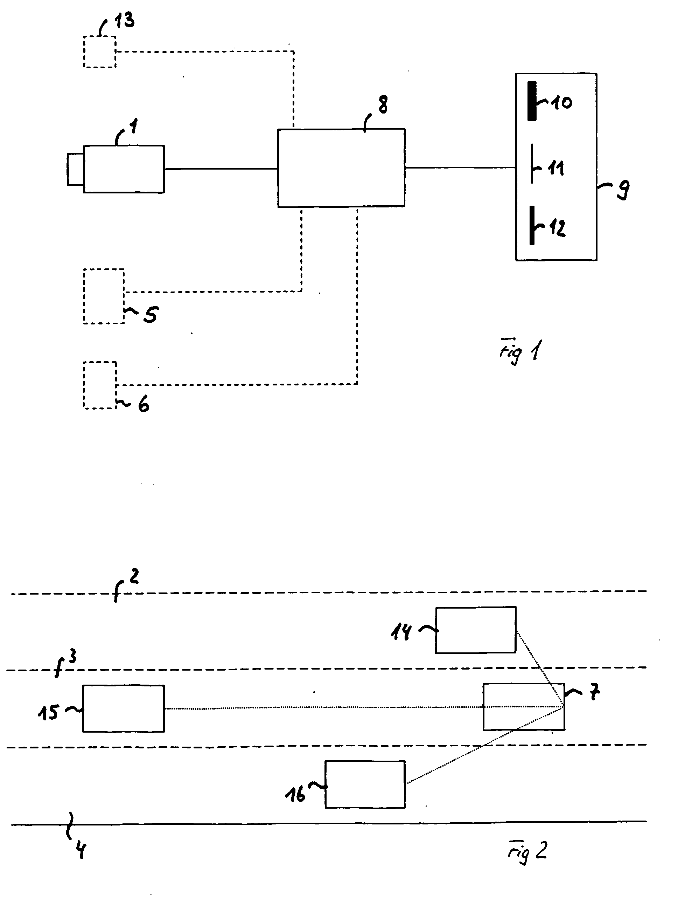

Aus der Figur 1 geht hervor, dass ein Fahrspurerfassungssystem zum Erfassen zumindest einer rückwärtigen Fahrspur eine Kamera 1 aufweist, die so ausgebildet ist, dass sie in rückwärtiger Blickrichtung zumindest die Fahrspuren 2, 3, 4 erfassen kann.

Alternativ oder in Ergänzung hierzu kann das Fahrspurerfassungssystem aber auch eine Navigationseinrichtung 5 und/oder eine GPS-Datenerfassungseinrichtung 6 aufweisen. Sind in den Navigationsdaten Daten enthalten, die die Anzahl der Fahrspuren 2, 3, 4 der momentan befahrenen Straße angeben so kann, aufgrund der GPS-Daten, die aktuelle Position des Fahrzeuges 7 erfasst werden. Diese Signale oder die Signale der Kamera 1 werden einer Markierungserzeugungseinrichtung 8 zugeführt, die aufgrund dieser Signale an einer Anzeigeeinrichtung 9 eine Markierung 10, 11, 12 erzeugt, die die Fahrspur beziehungsweise Fahrspuren 2, 3 4 repräsentieren. Die Anzeigeeinrichtung 9 kann hierbei als Monitor, als Projektionseinrichtung oder beispielsweise auch als im Wesentlichen transparente Anzeigefolie ausgeführt sein, die einem Spiegel zugeordnet ist. Werden die Signale einer Fahrzeugserfassungseinrichtung, beispielsweise der Kamera 1 beziehungsweise eines Abstandssensors 13, der beispielsweise als Radarsensor ausgeführt ist, als Abstandsmesseinrichtung dahingehend ausgewertet auf welcher Fahrspur 2, 3, 4 und in welchem Abstand sich ein nachfolgendes Fahrzeug 14, 15, 16 befindet, so kann über die Markierungserzeugungseinrichtung 8 die Markierung 10, 11, 12 dementsprechend vorteilhaft verändert werden. Die Markierung 10, 11, 12 kann, dem Abstand entsprechend, vergrößert oder verkleinert, heller oder dunkler und/oder auch farblich verändert werden. Beispielsweise erfolgt eine Veränderung in Hinsicht auf Aufmerksamkeitserhöhung dann, wenn der Abstand eines nachfolgenden Fahrzeuges 14, 15 relativ klein und/oder ein Spurwechsel mit einem hohen Kollisionsrisiko verbunden ist. Befindet sich ein Fahrzeug 16 auf einer relativ unkritischen Fahrspur 3 und/oder in einem unkritischen Abstand, so ist die Markierung 10, 11, 12 hinsichtlich der Wahrnehmbarkeit relativ unbedeutend ausgeführt.

Im Rahmen der Erfindung kann die Markierung als Balken oder auch direkt als symbolisches Fahrzeug oder auch einer Kombination daraus ausgeführt sein.

### Liste der Bezugszeichen:

- 1: Kamera
- 2, 3, 4: Fahrspur
- 5: Navigationseinrichtung
- 6: Datenerfassungseinrichtung
- 7: Fahrzeug
- 8: Markierungserzeugungseinrichtung
- 9: Anzeigeeinrichtung
- 10, 11, 12: Markierung
- 13: Abstandssensor
- 14, 15, 16: Nachfolgendes Fahrzeug

## Patentansprüche

1. Kraftfahrzeug (7) mit einem Fahrspurerfassungssystem zum Erfassen zumindest einer rückwärtigen Fahrspur (2, 3, 4),
mit einer Markierungserzeugungseinrichtung (8) und
mit einer Anzeigeeinrichtung (9),
wobei aufgrund eines vom Fahrspurerfassungssystem erzeugten Fahrspursignals über die Markierungserzeugungseinrichtung (8) eine die erfasste Fahrspur (2, 3, 4) darstellende Markierung (10, 11, 12) an der Anzeigeeinrichtung (9) erzeugt wird, wobei
das Kraftfahrzeug (7) eine Fahrzeugerfassungseinrichtung aufweist, wobei über die Fahrzeugerfassungseinrichtung in Verbindung mit der Markierungserzeugungseinrichtung (8) auf der Anzeigeeinrichtung (9) eine Kennzeichnung der Fahrspur (2, 3, 4) erfolgt, auf der sich das Fahrzeug (7) befindet, und
das Kraftfahrzeug (7) mit einer Abstandsmesseinrichtung (13) zum Messen des Abstands zu nachfolgenden Fahrzeugen (14, 15, 16) und auf welcher Fahrspur (2, 3, 4) sich die nachfolgenden Fahrzeuge (14, 15, 16) befinden, und zum Kennzeichnen des Abstands in Verbindung mit der Markierungserzeugungseinrichtung (8) ausgeführt ist, wobei eine Kennzeichnung des Abstands durch Veränderung der die entsprechende erfasste Fahrspur (2, 3, 4) darstellenden Markierung (10, 11, 12) erfolgt.

## Claims

1. Motor vehicle (7) having a lane detection system for detecting
at least one lane (2, 3, 4) behind said motor vehicle,
comprising a marking generating device (8) and
a display device (9),
wherein a marking (10, 11, 12) representing the detected lane (2, 3, 4) is generated on the display device (9) by means of the marking generating device (8) as a result of a lane signal generated by the lane detection system, wherein the motor vehicle (7) has a vehicle detection device, wherein the lane (2, 3, 4) in which the vehicle (7) is located is indicated on the display device (9) by means of the vehicle detection device in conjunction with the marking generating device (8), and
the motor vehicle (7) is designed having a distance measuring device (13) for measuring both the distance from tailing vehicles (14, 15, 16) and in which lane (2, 3, 4) said tailing vehicles (14, 15, 16) are located, and for indicating the distance in conjunction with the marking generating device (8), wherein the distance is indicated by changing the marking (10, 11, 12) which represents the corresponding detected lane (2, 3, 4).

## Revendications

1. Véhicule automobile (7) comprenant un système de détection de voie(s) de circulation pour détecter au moins une voie de circulation arrière (2, 3, 4), comportant :
au moins un dispositif de production de marquage (8) et
un dispositif d'affichage (9),
dans lequel, en raison d'un signal de voie de circulation produit par le système de détection de voie(s) de circulation, via le dispositif de production de marquage (8), il apparaît sur le dispositif d'affichage (9) un marquage (10, 11, 12) représentant la voie de circulation détectée (2, 3, 4), dans lequel :
le véhicule automobile (7) présente un dispositif de détection de véhicule, dans lequel il s'établit sur le dispositif d'affichage (9) une caractérisation de la voie de circulation (2, 3, 4) sur laquelle se trouve le véhicule (7) via le dispositif de détection de véhicule en liaison avec le dispositif de production de marquage (8), et
le véhicule automobile (7) est conçu avec un dispositif de mesure de distance (13) pour mesurer la distance aux véhicules (14, 15, 16) qui suivent et sur quelle voie de circulation (2, 3, 4) les véhicules suivants (14, 15, 16) se trouvent ainsi que pour caractériser la distance en liaison avec le dispositif de production de marquage (8), dans lequel une caractérisation de la distance se fait par modification du marquage (10, 12, 14) représentant la voie de circulation détectée correspondante (2, 3, 4).
